(19) Europäisches Patentamt
European Patent Office
Office européen des brevets

(11) **EP 3 710 857 B1**

(12) **FASCICULE DE BREVET EUROPEEN**

(45) Date de publication et mention de la délivrance du brevet:
**23.11.2022 Bulletin 2022/47**

(21) Numéro de dépôt: **18800229.9**

(22) Date de dépôt: **16.11.2018**

(51) Classification Internationale des Brevets (IPC):
**G01S 15/18** (2006.01)     **G01S 15/58** (2006.01)
**G01S 15/60** (2006.01)

(52) Classification Coopérative des Brevets (CPC):
**G01S 15/18; G01S 15/582; G01S 15/60**

(86) Numéro de dépôt international:
**PCT/EP2018/081649**

(87) Numéro de publication internationale:
**WO 2019/097029 (23.05.2019 Gazette 2019/21)**

(54) **PROCÉDÉ, MODULE ET SYSTÈME DE DÉTERMINATION D'UN PROFIL DE CÉLÉRITÉ D'ONDES SONORES DANS UNE COLONNE D'EAU**

VERFAHREN, MODUL UND SYSTEM ZUR BESTIMMUNG EINES GESCHWINDIGKEITSPROFILS VON SCHALLWELLEN IN EINER WASSERSÄULE

METHOD, MODULE AND SYSTEM FOR DETERMINING A VELOCITY PROFILE OF SOUND WAVES IN A WATER COLUMN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2017 FR 1701193**

(43) Date de publication de la demande:
**23.09.2020 Bulletin 2020/39**

(73) Titulaire: **Naval Group**
**75015 Paris (FR)**

(72) Inventeur: **ANDRE, Jonathan**
**56311 Lorient (FR)**

(74) Mandataire: **Lavoix**
**2, place d'Estienne d'Orves**
**75441 Paris Cedex 09 (FR)**

(56) Documents cités:
**US-A- 5 483 499     US-A- 5 568 450**
**US-B1- 6 577 557**

• **SADALAGE JYOTI A ET AL: "Precise estimation of sound velocity profile and its impact on sediment classification in the tropical shallow freshwater reservoirs", 2015 IEEE UNDERWATER TECHNOLOGY (UT), IEEE, 23 février 2015 (2015-02-23), pages 1-6, XP032777074, DOI: 10.1109/UT.2015.7108227**

**Description**

La présente invention concerne un procédé de détermination d'un profil de célérité d'ondes sonores dans une colonne d'eau.

La présente invention s'applique en particulier à la détermination de la célérité des ondes sonores en milieu sous-marin, en fonction de la profondeur.

La connaissance de la célérité des ondes sonores en fonction de la profondeur est par exemple nécessaire pour améliorer les performances de mesures de senseurs acoustiques, en particulier pour la détermination précise de la vitesse d'un véhicule marin tel qu'un navire par rapport au fond marin par la technique Loch-Doppler, pour la réalisation de sondages, notamment pour la détermination de la valeur de hauteur d'eau sous un navire, ou pour l'utilisation d'un sonar.

Selon la technique Loch-Doppler, des antennes acoustiques, fixée sous la coque du navire, émettent des ondes acoustiques en direction du fond marin. Ces ondes sont réfléchies par le fond ou le toit d'une couche d'eau profonde, avec un décalage de fréquence, par rapport à la fréquence d'émission, qui dépend de la vitesse du navire. La comparaison de la fréquence de l'onde émise avec celle de l'onde réfléchie permet donc de déterminer la vitesse du navire.

Néanmoins, le décalage de fréquence dépend également de la célérité des ondes sonores dans le milieu marin. En effet, la célérité du son n'est pas constante mais dépend de la température, de la salinité, et de l'immersion.

Par ailleurs, la détermination précise de la hauteur de fond au moyen d'un sondeur nécessite également une connaissance aussi précise que possible du profil de célérité dans la colonne d'eau.

Il est donc souhaitable, avant toute réalisation de mesures par des senseurs acoustiques, d'établir un profil de célérité des ondes sonores dans le milieu marin dans lequel le navire évolue.

Il est également connu un procédé de détermination d'une célérité du document US 6 577 557 B1 et un procédé de détermination de caractéristique d'un fond d'un océan du document US 5 568 450 A.

Pour établir un tel profil de célérité, il est connu d'utiliser des sondes bathycélérimétriques, par exemple des sondes de type XSV, ou des sondes bathythermographiques, par exemple des sondes de types CTD ou XCTD.

Les sondes bathycélérimétriques effectuent directement une mesure de la célérité, en général par mesure de phase, tandis que les sondes bathythermographiques déterminent le profil de célérité en mesurant la température de l'eau, et éventuellement sa salinité, en fonction de l'immersion.

De telles solutions ne donnent pas entièrement satisfaction.

En effet, les sondes bathycélérimétriques et bathythermographiques sont onéreuses, et d'utilisation peu discrète.

En outre, ces sondes sont immergées à des profondeurs qui peuvent être importantes et soumises à de fortes contraintes mécaniques susceptibles de les endommager. On utilise couramment des sondes perdables, qui ne sont utilisées qu'une unique fois, et qui doivent par conséquent être constamment renouvelées.

Un but de l'invention est donc de fournir un procédé et un système de détermination d'un profil de célérité d'une colonne d'eau qui soit à la fois précis, réutilisable et peu onéreux.

A cette fin, l'invention a pour objet un procédé du type précité, caractérisé en ce qu'il comprend les étapes suivantes :

- émission dans ladite colonne d'eau, par un émetteur situé dans la colonne d'eau à une profondeur d'émission, d'au moins une onde sonore incidente émise à au moins une fréquence d'émission, ledit émetteur étant animé d'un mouvement selon au moins un axe par rapport à ladite colonne d'eau,
- réception, par un récepteur, d'au moins une première onde sonore réfléchie par un premier objet réflecteur situé dans ladite colonne d'eau à une première profondeur et une deuxième onde sonore réfléchie par un deuxième objet réflecteur situé dans ladite colonne d'eau à une deuxième profondeur, supérieure à ladite première profondeur,
- fourniture d'une première célérité des ondes sonores à ladite première profondeur,
- détermination d'une deuxième célérité des ondes sonores à ladite deuxième profondeur, à partir de fréquences de ladite première et de ladite deuxième ondes sonores réfléchies, de la fréquence d'émission et de ladite première célérité.

Le procédé selon l'invention peut comprendre l'une ou plusieurs des caractéristiques suivantes, prise(s) isolément ou suivant toute combinaison techniquement possible :

- ladite deuxième célérité est déterminée comme :

$$C_2 = \frac{\Delta f_1}{\Delta f_2} \cdot C_1 ,$$

Où:

$$\Delta f_1 = f_1 - f_0 ,$$

$$\Delta f_2 = f_2 - f_0 ,$$

$f_0$ est la fréquence d'émission,
$f_1$ est la fréquence de la première onde sonore réfléchie,

$f_2$ est la fréquence de la deuxième onde sonore réfléchie,

$C_1$ est la première célérité à la première profondeur.

- le procédé comprend en outre :

  ▪ la fourniture d'une valeur de ladite première profondeur,
  ▪ la détermination d'une valeur de ladite deuxième profondeur, en fonction de ladite deuxième célérité et/ou de ladite première célérité, de la valeur de ladite première profondeur et d'un écart temporel entre la réception par le récepteur de l'onde sonore réfléchie par ledit premier objet réflecteur et la réception par le récepteur de l'onde réfléchie par ledit deuxième objet réflecteur ;

- ledit récepteur est animé d'un mouvement selon ledit axe dans ladite colonne d'eau, de préférence identique au mouvement dudit émetteur ;
- ledit émetteur et ledit récepteur sont solidaires ou confondus ;
- la fourniture de la première célérité comprend les phases suivantes :

  ▪ détermination d'une célérité des ondes sonores à ladite profondeur d'émission,
  ▪ détermination de la première célérité, à partir de ladite fréquence de la première onde sonore réfléchie, de ladite fréquence d'émission et de la célérité à ladite profondeur d'émission ;

- la détermination de la première célérité comprend :

  ▪ estimation d'une vitesse de déplacement moyenne dudit émetteur dans ladite colonne d'eau selon ledit axe, à partir de la célérité à ladite profondeur d'émission,
  ▪ détermination de ladite première célérité, à partir de la fréquence de la première onde sonore réfléchie, de la fréquence d'émission et de ladite vitesse de déplacement moyenne estimée ;

- ladite première célérité est déterminée comme :

$$C_1 = 2\frac{f_0}{\Delta f_1} \cdot V_z \, ,$$

où : $V_z$ est la vitesse de déplacement estimée dudit émetteur dans ladite colonne d'eau selon ledit axe ;
- la fourniture de la première célérité comprend la détermination de la première célérité au moyen d'une sonde située à ladite première profondeur ;

- le procédé comprend les étapes suivantes:

  ▪ réception, par ledit récepteur, d'une pluralité d'ondes sonores réfléchies par une pluralité d'objets réflecteurs situés dans ladite colonne d'eau à une pluralité de profondeurs croissantes,
  ▪ la mise en œuvre d'une pluralité d'étapes successives et itératives de détermination de célérités des ondes sonores à ladite pluralité de profondeurs croissantes,

la célérité à chaque profondeur étant déterminée à partir de la fréquence de l'onde réfléchie par l'objet réflecteur à ladite profondeur, de la fréquence d'une onde réfléchie par un objet réflecteur situé dans ladite colonne d'eau à la profondeur précédente, de la fréquence d'émission et de la célérité des ondes sonores à ladite profondeur précédente ;
- la célérité des ondes sonores à chaque profondeur est déterminée comme :

$$C_i = \frac{\Delta f_{i-1}}{\Delta f_i} \cdot C_{i-1} \, ,$$

Où:

$$\Delta f_i = f_i - f_0 \, ,$$

$$\Delta f_{i-1} = f_{i-1} - f_0 \, ,$$

$f_i$ est la fréquence de l'onde sonore réfléchie à ladite profondeur,
$f_{i-1}$ est la fréquence de l'onde sonore réfléchie à la profondeur précédente,
$C_{i-1}$ est la célérité à la profondeur précédente.

- le procédé comprend en outre la détermination itérative de la valeur de chaque profondeur, la valeur de chaque profondeur donnée étant déterminée en fonction de la profondeur précédente précédemment déterminée, de la célérité des ondes sonores déterminée à ladite profondeur donnée et/ou de la célérité des ondes sonores à la profondeur précédente, et d'un écart temporel entre la réception par le récepteur de l'onde sonore réfléchie par un objet réflecteur à ladite profondeur précédente et la réception par le récepteur de l'onde sonore réfléchie par un objet réflecteur à ladite profondeur donnée.

L'invention a par ailleurs pour objet un module de détermination d'un profil de célérité d'ondes sonores dans une colonne d'eau pour la mise en œuvre d'un procédé selon l'invention, ledit module étant adapté pour déterminer, à partir des fréquences de ladite première et de ladite deuxième ondes sonores réfléchies, de la fréquence d'émission et de ladite première célérité, la deuxième célérité des ondes sonores à ladite deuxième profondeur.

L'invention a également pour objet un système de détermination d'un profil de célérité d'ondes sonores dans une colonne d'eau, ledit système comprenant:

- un émetteur adapté pour émettre dans ladite colonne d'eau, depuis une profondeur d'émission, au moins une onde sonore incidente émise à au moins une fréquence d'émission, ledit émetteur étant animé d'un mouvement selon au moins un axe par rapport à ladite colonne d'eau,
- un récepteur adapté pour recevoir au moins une première onde sonore réfléchie par un premier objet situé dans ladite colonne d'eau à une première profondeur, et une deuxième onde sonore réfléchie par un deuxième objet situé dans ladite colonne d'eau à une deuxième profondeur, supérieure à ladite première profondeur,
- un module de détermination du profil de célérité selon l'invention.

Selon un mode de réalisation, ledit émetteur et ledit récepteur sont solidaires ou confondus.

L'invention sera mieux comprise à la lecture de la description qui va suivre, donnée uniquement à titre d'exemple, et faite en se référant aux dessins annexés, sur lesquels :

- la figure 1 est un schéma, vu de profil, d'une colonne d'eau et d'un système selon un mode de réalisation de l'invention, mis en place sur un navire, pour la détermination de la célérité d'ondes sonores dans la colonne d'eau;
- la figure 2 est un schéma synoptique illustrant un mode de réalisation d'un procédé selon l'invention.

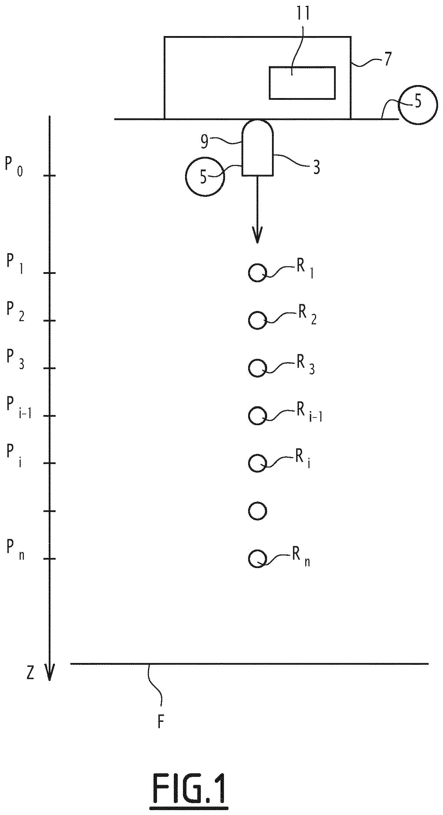

On a illustré sur la Figure 1 un système de détermination du profil de célérité d'une colonne d'eau selon un mode de réalisation de l'invention.

La colonne d'eau, qui est par exemple une colonne d'eau dans un milieu marin, s'étend entre la surface S et le fond F, dont la profondeur est variable.

Dans ce qui suit, on entend par profondeur en un point de la colonne d'eau la distance, selon un axe vertical, entre la surface S et ce point. La profondeur est donc croissante depuis la surface vers le fond.

La colonne d'eau comporte de nombreuses inhomogénéités, par exemple des particules en suspension, des organismes vivants (poissons, plancton), qui sont susceptibles de générer des réflexions d'ondes sonores émises par un émetteur.

Selon l'invention, les ondes sonores réfléchies par de telles inhomogénéités à diverses profondeurs de la colonne d'eau sont exploitées pour déterminer de proche en proche, depuis la surface vers le fond, la célérité des ondes sonores à ces diverses profondeurs, en tirant profit de l'effet Doppler résultat d'un mouvement relatif de l'émetteur et du récepteur des ondes sonores, par rapport à la colonne d'eau, donc par rapport aux inhomogénéités.

A cette fin, le système illustré sur la Figure 1 comprend un émetteur 3 d'ondes sonores et un récepteur 5 d'ondes sonores.

L'émetteur 3 et le récepteur 5 sont destinés à être fixés à un porteur 7, qui est par exemple un navire ou un sous-marin, en étant immergés dans la colonne d'eau, à une profondeur $P_0$ faible, par exemple comprise entre 2 et 10 mètres.

La profondeur $P_0$ sera par la suite appelée profondeur d'émission.

Ainsi fixés, l'émetteur 3 et le récepteur 5 sont animés d'un mouvement par rapport à la colonne d'eau.

Ce mouvement peut être dû à la houle, qui génère un mouvement de la coque du porteur 7, donc de l'émetteur 3 et du récepteur 5. Un tel mouvement est principalement selon un axe vertical Z.

Ce mouvement peut également être dû à un déplacement volontaire du porteur 7 selon au moins un axe horizontal X et/ ou Y, entraînant un mouvement correspondant de l'émetteur 3 et du récepteur 5.

Dans la description qui suit, on considérera dans un premier temps uniquement la composante selon l'axe Z de la vitesse de l'émetteur 3 et du récepteur 5, notées respectivement $V_{Z3}$ et Vzs.

L'émetteur 3 et le récepteur 5 sont de préférence confondus et forment un émetteur-récepteur.

En variante, l'émetteur 3 et le récepteur 5 sont distincts, mais sont animés du même mouvement par rapport à la colonne d'eau. Par exemple, l'émetteur 3 et le récepteur 5 sont solidaires.

Dans ces deux cas, les vitesses $V_{Z3}$ et Vzs sont égales, et seront notées par la suite $V_Z$.

L'émetteur 3 est configuré pour émettre des ondes sonores dans la colonne d'eau, en direction du fond, avec un angle d'incidence, par rapport à la verticale, qui est nul dans l'exemple illustré sur la Figure 1.

Ces ondes sonores peuvent comprendre une ou plusieurs composantes à diverses fréquences. On considérera néanmoins par la suite, à titre de simplification, que l'onde sonore émise comprend une unique composante à une fréquence d'émission $f_0$ prédéterminée. La fréquence d'émission $f_0$ est par exemple comprise entre 100 et 400 kHz.

Bien entendu, l'invention peut être mise en œuvre en émettant une onde sonore comprenant au moins deux composantes à des fréquences distinctes, un ou plusieurs composantes correspondantes des ondes réfléchies pouvant être exploitées pour la détermination du profil de célérité.

De préférence, le système comporte en outre une sonde 9, par exemple une sonde de température d'eau de mer, une sonde bathycélérimétrique ou bathythermographique, configurée pour déterminer la célérité,

notée $C_0$, des ondes sonores à la profondeur $P_0$ d'émission. Par exemple, la sonde 9 est intégrée à l'émetteur 3 et/ou au récepteur 5.

Lors de sa propagation dans la colonne d'eau, une onde sonore émise par l'émetteur 3 est soumise à des réflexions partielles par divers objets situés dans la colonne d'eau à diverses profondeurs. Ces objets, appelés par la suite objets réflecteurs ou simplement réflecteurs, sont en particulier des inhomogénéités, telles que décrites ci-dessus.

Le récepteur 5 est configuré pour recevoir ces ondes réfléchies.

Le système de la Figure 1 comporte en outre un module 11 de détermination d'un profil de célérité des ondes sonores dans la colonne d'eau, à partir de la connaissance des ondes sonores émises et réfléchies.

En particulier, le module 11 de détermination est relié à l'émetteur 3. Le module 11 est configuré pour commander l'émission d'ondes sonores par l'émetteur à la fréquence d'émission f0.

Le module 11 de détermination est également relié au récepteur 5. Le module 11 est configuré pour recevoir du récepteur 5 des signaux électriques représentatifs des ondes sonores réfléchies reçues par le récepteur 5.

Le module 11 est configuré pour analyser les ondes sonores reçues du récepteur 5, et pour identifier et sélectionner, parmi ces ondes sonores, des ondes sonores réfléchies par des réflecteurs situés dans la colonne d'eau à diverses profondeurs.

Le module 11 est par ailleurs configuré pour ordonner spatialement ces réflecteurs dans la colonne d'eau selon l'axe Z, en fonction du temps de parcours écoulé entre l'émission de l'onde incidente et la réception de chacune des ondes sonores réfléchies. A chaque réflecteur est donc associé un indice noté i, représentatif de la position de cet objet par rapport aux autres réflecteurs.

L'indice i est croissant avec la profondeur depuis l'indice 1 correspondant à une première profondeur $P_1$ jusqu'à un indice n correspondant à une profondeur maximale $P_n$ à laquelle la célérité des ondes sonores doit être déterminée. Cette profondeur maximale correspond par exemple à la profondeur du fond marin. Dans ce cas, l'onde sonore réfléchie à la profondeur maximale $P_n$ est une onde réfléchie par le fond marin.

En variante, la profondeur maximale $P_n$ est une profondeur inférieure à celle du fond marin.

La profondeur maximale $P_n$ peut par exemple atteindre 200 mètres. Ainsi, la profondeur maximale $P_n$ peut par exemple être comprise entre 50 et 200 mètres, notamment entre 100 et 200 mètres, en particulier entre 150 mètres et 200 mètres.

En outre, le module 11 est configuré pour déterminer, de proche en proche, depuis les faibles profondeurs vers les plus importantes profondeurs, et de manière itérative, la profondeur à laquelle se situe chacun de ces réflecteurs ainsi que la célérité du son à cette profondeur.

En particulier, la profondeur $P_i$ d'un réflecteur donné, noté $R_i$, est déterminée à partir de la profondeur $P_{i-1}$ précédemment déterminée du réflecteur précédent $R_{i-1}$. La célérité du son $C_i$ à cette profondeur $P_i$ est déterminée à partir de la célérité du son $C_{i-1}$ précédemment déterminée à la profondeur précédente $P_{i-1}$.

La célérité du son $C_i$ à la profondeur $P_i$ est en particulier déterminée en fonction de la fréquence $f_i$ de l'onde réfléchie par le réflecteur $R_i$, de la fréquence $f_{i-1}$ de l'onde réfléchie par le réflecteur précédent $R_{i-1}$, de la fréquence $f_0$ de l'onde émise, et de la célérité $C_{i-1}$ précédemment déterminée à la profondeur précédente $P_{i-1}$.

En particulier, le module 11 exploite l'effet Doppler, c'est-à-dire la différence de fréquence entre l'onde émise et l'onde réfléchie, résultant du mouvement de l'émetteur 3 et du récepteur 5 par rapport aux réflecteurs $R_i$ et $R_{i-1}$.

Par fréquence $f_i$ d'une onde réfléchie, on entend la fréquence de l'onde réfléchie telle que reçue par la récepteur 5. En effet, un premier décalage de fréquence est causé par le mouvement relatif de l'émetteur 3 par rapport au réflecteur, et un deuxième décalage de fréquence est dû au mouvement relatif du réflecteur par rapport au récepteur 5. Ainsi, la fréquence d'une onde réfléchie, lors de sa réflexion par un réflecteur, diffère de la fréquence de cette onde réfléchie telle que reçue par le récepteur 5.

Les vitesses $V_{Z3}$ et $V_{Z5}$, et, en considérant que l'émetteur 3 et le récepteur 5 sont animés du même mouvement, la vitesse $V_Z$, sont faibles devant celle du son.

De manière générale, la fréquence $f_i$ d'une onde réfléchie, telle que reçue par le récepteur 5, est égale, par effet Doppler, à :

$$f_i = f_0 \cdot \left( 1 + \frac{V_{Z3} + V_{Z5}}{C_i} \right).$$

Dans le cas où l'émetteur 3 et le récepteur 5 sont animés du même mouvement par rapport au réflecteur $R_i$, la fréquence $f_i$ d'une onde réfléchie, telle que reçue par le récepteur 5, est donc égale, par effet Doppler, à :

$$f_i = f_0 \cdot \left( 1 + 2\frac{V_Z}{Ci} \right)$$

De même, la fréquence $f_{i-1}$ de l'onde réfléchie par le réflecteur précédent $R_{i-1}$ est égale à :

$$f_{i-1} = f_0 \cdot \left( 1 + 2\frac{V_Z}{C_{i-1}} \right)$$

Le module 11 est ainsi apte à déterminer la célérité du son $C_i$ à la profondeur $P_i$ du réflecteur $R_i$, à partir de la célérité $C_{i-1}$ précédemment déterminée à la profondeur précédente $P_{i-1}$, comme :

$$C_i = \frac{\Delta f_{i-1}}{\Delta f_i} \cdot C_{i-1},$$

Où :

$$\Delta f_{i-1} = f_{i-1} - f_0,$$

$$\Delta f_i = f_i - f_0.$$

Par ailleurs, le module 11 est configuré pour déterminer la profondeur $P_i$ en fonction de la profondeur $P_{i-1}$ précédemment déterminée et de la différence de temps de parcours entre l'onde réfléchie par le réflecteur $R_{i-1}$ et l'onde réfléchie par le réflecteur $R_i$, c'est-à-dire l'écart temporel $\Delta t_i$ entre la réception par le récepteur 5 de l'onde réfléchie par le réflecteur $R_{i-1}$ et la réception par le récepteur 5 de l'onde réfléchie par le réflecteur $R_i$.

Par exemple, la profondeur $P_i$ est déterminée en fonction de la profondeur $P_{i-1}$ précédemment déterminée, de la célérité $C_i$, de la célérité $C_{i-1}$ à la profondeur précédente $P_{i-1}$, et de l'écart temporel $\Delta t_i$.

Notamment, en considérant que la célérité des ondes sonores entre le réflecteur Ri-1 et le réflecteur Ri est égale à la moyenne des célérités $C_{i-1}$ et $C_i$, la profondeur Pi peut être déterminée par le module 11 comme :

$$P_i = P_{i-1} + \Delta t_i \cdot \frac{C_i + C_{i-1}}{4}.$$

Notamment, selon une variante, le module 11 est configuré pour déterminer la profondeur $P_i$, à partir de la profondeur $P_{i-1}$, de la célérité $C_{i-1}$ des ondes à la profondeur $P_{i-1}$, et de l'écart temporel $\Delta t_i$ comme :

$$P_i = P_{i-1} + \Delta t_i \cdot \frac{C_{i-1}}{2}$$

Afin d'initialiser le calcul, le module 11 est configuré pour déterminer une première célérité $C_1$ des ondes à la première profondeur $P_1$.

A titre d'exemple, afin de déterminer cette première célérité $C_1$, le module 11 estime la profondeur $P_1$ en première approximation, en considérant que la célérité des ondes entre l'émetteur 3 / le récepteur 5 et le premier réflecteur $R_1$ est égale à la célérité $C_0$, et à partir du temps de parcours mesuré entre l'émission d'une onde sonore incidente et la réception de l'onde sonore réfléchie par le premier réflecteur $R_1$.

Le module 11 est par ailleurs propre à estimer une vitesse moyenne $V_Z$ de déplacement du porteur 7 dans la colonne d'eau selon l'axe Z, à partir de la célérité $C_0$, par exemple en estimant la profondeur $P_1$ en deux instants distincts mais rapprochés, une variation de cette profondeur $P_1$ estimée résultant du déplacement du porteur 7, donc du mouvement de l'émetteur 3 et du récepteur 5, entre ces deux instants distincts.

Le module 11 est ensuite apte à déterminer la première célérité $C_1$ à partir de la différence de fréquence entre l'onde sonore émise et l'onde sonore réfléchie par le premier réflecteur $R_1$, telle que reçue par le récepteur 5, selon :

$$C_1 = 2 \frac{f_0}{\Delta f_1} \cdot V_z,$$

Où

$$\Delta f_1 = f_1 - f_0,$$

$f_0$ est la fréquence d'émission,
$f_1$ est la fréquence de la première onde sonore réfléchie.

A partir de la valeur de la première célérité $C_1$ déterminée, le module 11 est apte à déterminer par itération, de proche en proche, la célérité des ondes sonores à chacun des profondeur Pi, et cette profondeur Pi, et ainsi d'obtenir un profil de célérité des ondes sonores dans la colonne d'eau.

Un tel profil de célérité comprend, un ensemble de profondeurs Pi (i=0... n), et l'ensemble des célérités Ci (i=0... n) déterminées à ces profondeurs.

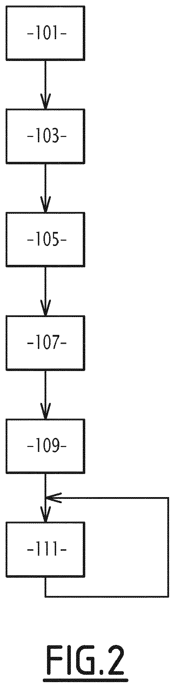

Un exemple de mise en œuvre d'un procédé selon un mode de réalisation de l'invention, au moyen du système décrit en référence à la Figure 1, pour la détermination d'un profil de célérité des ondes sonores dans une colonne d'eau, va maintenant être décrit en référence à la Figure 2.

Dans cet exemple, on considère que le porteur 7, donc l'émetteur 3 et le récepteur 5, est animé d'un mouvement vertical selon l'axe Z, avec une vitesse $V_Z$.

Lors d'une étape initiale 101, la sonde 9 détermine la célérité $C_0$ des ondes à la profondeur $P_0$.

Puis, lors d'une étape 103, le module 11 commande l'émission par l'émetteur 3 d'au moins une onde sonore à la fréquence $f_0$ dans la colonne d'eau, en direction du fond marin.

Lors de sa propagation dans la colonne d'eau, une onde sonore émise par l'émetteur 3 est soumise à des réflexions partielles par des réflecteurs.

Lors d'une étape 105, le récepteur 5 reçoit les ondes sonores réfléchies par le milieu marin, incluant les réflexions par les réflecteurs, et les transmet au module 11.

Puis, lors d'une étape 107, le module 11 analyse les ondes sonores reçues, sélectionne et identifie, parmi ces ondes sonores, des ondes sonores réfléchies par des réflecteurs $R_i$ situés dans la colonne d'eau à diverses profondeurs $P_i$.

Lors de cette étape 107, le module 11 ordonne spatialement ces réflecteurs $R_i$ dans la colonne d'eau selon l'axe Z, en fonction du temps de parcours écoulé entre l'émission de l'onde incidente et la réception de chacune des ondes sonores réfléchies.

Lors d'une étape 109, le module 11 détermine la fréquence $f_1$ de la première onde sonore réfléchie, puis détermine la première célérité $C_1$ à la profondeur $P_1$, à partir de la fréquence $f_1$, de la fréquence d'émission $f_0$ et de la célérité $C_0$ mesurée lors de l'étape 101.

Notamment, lors de l'étape 109, le module 11 estime une vitesse moyenne de déplacement de l'émetteur et du récepteur dans la colonne d'eau selon l'axe Z, puis détermine la première célérité $C_1$ comme :

$$C_1 = 2\frac{f_0}{\Delta f_1} \cdot V_z$$

Puis, lors d'une pluralité d'étapes successives 111, mises en œuvre itérativement, le module 11 détermine successivement la célérité $C_i$ des ondes sonores en chacune des profondeurs $P_i$, ainsi que la valeur de cette profondeur $P_i$.

Chaque célérité $C_i$ est déterminée à partir de la fréquence $f_i$ de l'onde sonore réfléchie à la profondeur $P_i$, de la fréquence $f_{i-1}$ réfléchie à la profondeur précédente $P_{i-1}$, de la fréquence $f_0$ d'émission, et de la célérité $C_{i-1}$ déterminé lors de l'étape 109 précédente (ou, si l'étape 111 est la première à être mise en œuvre, de la célérité $C_1$ déterminée lors de l'étape 109).

Lors de chaque étape 111, le module 11 détermine la fréquence $f_i$, puis détermine la célérité $C_i$ comme :

$$C_i = \frac{\Delta f_{i-1}}{\Delta f_i} \cdot C_{i-1}$$

Par ailleurs, le module 11 détermine lors de chaque étape 111 la profondeur $P_i$ à laquelle se trouve le réflecteur. La profondeur $P_i$ est déterminée à partir de la profondeur $P_{i-1}$ précédente, déterminée lors de l'étape 111 précédente (ou, s'il s'agit de la profondeur $C_1$, lors de l'étape 109), de la célérité $C_i$ et/ou de la célérité $C_{i-1}$ à la profondeur précédente, et de la différence de temps de parcours entre l'onde réfléchie par le réflecteur $R_{i-1}$ et l'onde réfléchie par le réflecteur $R_i$, c'est-à-dire l'écart temporel entre la réception par le récepteur 5 de l'onde réfléchie par le réflecteur $R_{i-1}$ et la réception par le récepteur 5 de l'onde réfléchie par le réflecteur $R_i$.

Ainsi, lors d'une première étape 111, le module 11 détermine la célérité $C_2$ des ondes sonores à la profondeur $P_2$, et la profondeur $P_2$.

Lors de chaque étape 111 suivante, le module 11 détermine la célérité $C_i$ des ondes sonores à une profondeur $P_i$, et la profondeur $P_i$.

Le système et le procédé selon l'invention permettent donc d'établir de manière précise, peu onéreuse et discrète un profil de célérité des ondes sonores dans la colonne d'eau.

Selon une variante, l'angle d'incidence formé par les ondes sonores émises avec la verticale n'est pas nul, par exemple compris entre 15° et 30°. Dans une telle variante, les calculs et la méthode décrits ci-dessus restent bien entendus applicables. Notamment, chaque profondeur est déterminée en calculant la composante selon l'axe Z de la distance entre l'émetteur 3 et chaque objet réflecteur Ri.

Selon une autre variante, la célérité des ondes sonores à la première profondeur $P_1$ est déterminée par une sonde immergée à cette profondeur, par exemple une sonde bathycélérimétrique.

Selon un autre mode de réalisation, le porteur 7 est animé d'un mouvement selon au moins un axe horizontal X ou Y, par exemple selon l'axe horizontal X.

Dans ce mode de réalisation, les calculs et la méthode décrits ci-dessus restent également applicables, en remplaçant dans les équations ci-dessus la composante verticale de la vitesse Vz par la composante horizontale $V_X$ ou $V_Y$ de la vitesse.

De préférence, une détermination d'un premier profil de célérité est réalisée en imprimant au porteur 7, donc à l'émetteur 3 et au récepteur 5, un premier mouvement selon un axe horizontal X ou Y, une détermination d'un deuxième profil de célérité est réalisée en imprimant au porteur 7, donc à l'émetteur 3 et au récepteur 5, un deuxième mouvement selon un axe horizontal X ou Y, inverse du premier mouvement (i.e. dans le sens opposé et avec la même vitesse absolue), puis en moyennant les premier et deuxième profil de célérité obtenus, ceci afin d'annuler le potentiel effet d'un courant marin sur le calcul.

Selon une variante, les profondeurs successives $P_2,...P_i...P_n$ sont prédéfinies, et le module 11 sélectionne, de manière itérative, les ondes réfléchies par des réflecteurs $R_2,...R_i...R_n$ situés à ces profondeurs.

Ainsi, à partir de la profondeur $P_1$ et de la célérité $C_1$, le module 11 sélectionne une onde réfléchie par un réflecteur à la profondeur $P_2$ prédéfinie. Cette onde est telle que l'écart temporel $\Delta t_2$ entre la réception par le récepteur 5 de l'onde réfléchie par le réflecteur $R_1$ et la réception par le récepteur 5 de l'onde réfléchie par le réflecteur $R_2$ vérifie l'équation:

$$P_2 = P_1 + \Delta t_2 \cdot \frac{C_1}{2},$$

Le module 11 sélectionne ainsi l'onde réfléchie par un réflecteur à la profondeur $P_2$ prédéfinie en sélectionnant l'onde reçue à l'instant :

$$t_2 = \left(P_2 - P_1\right) \cdot \frac{2}{C_1} + t_1,$$

Où $t_1$ est l'instant de réception de l'onde réfléchie par le réflecteur $R_1$ à la profondeur $P_1$.

La célérité des ondes à la profondeur $P_2$ est déterminée comme décrit ci-dessus.

Puis, à partir de chaque profondeur $P_{i-1}$ et de la célérité $C_{i-1}$ associée, le module 11 sélectionne une onde réfléchie par un réflecteur à la profondeur $P_i$ prédéfinie. Cette onde est telle que l'écart temporel $\Delta t_i$ entre la réception par le récepteur 5 de l'onde réfléchie par le réflecteur $R_{i-1}$ et la réception par le récepteur 5 de l'onde réfléchie par le réflecteur $R_i$ vérifie l'équation :

$$P_i = P_{i-1} + \Delta t_i \cdot \frac{C_{i-1}}{2}.$$

Le module 11 sélectionne ainsi l'onde réfléchie par un réflecteur à la profondeur $P_i$ prédéfinie en sélectionnant l'onde reçue à l'instant :

$$t_i = \left(P_i - P_{i-1}\right) \cdot \frac{2}{C_{i-1}} + t_{i-1},$$

Où $t_{i-1}$ est l'instant de réception de l'onde réfléchie par le réflecteur $R_{i-1}$ à la profondeur $P_{i-1}$

Cette variante permet de sélectionner les profondeurs successives auxquelles une valeur de célérité est déterminée.

Dans l'exemple de réalisation de l'invention, le module 11 est réalisé sous forme d'un logiciel stocké dans une mémoire et aptes à être exécutés par un processeur, associé à la mémoire, le processeur et la mémoire formant une unité de traitement d'informations. En variante, le module 11 est réalisé au moins partiellement sous forme de composants logiques programmables, ou encore sous forme de circuits intégrés dédiés.

**Revendications**

1. Procédé de détermination d'un profil de célérité d'ondes sonores dans une colonne d'eau, ledit procédé étant **caractérisé en ce qu'**il comprend les étapes suivantes :

   - émission (103) dans ladite colonne d'eau, par un émetteur (3) situé dans la colonne d'eau à une profondeur ($P_0$) d'émission, d'au moins une onde sonore incidente émise à au moins une fréquence d'émission ($f_0$), ledit émetteur (3) étant animé d'un mouvement selon au moins un axe (Z) par rapport à ladite colonne d'eau,
   - réception (105), par un récepteur (5), d'au moins une première onde sonore réfléchie par un premier objet réflecteur ($R_1$, $R_{i-1}$) situé dans ladite colonne d'eau à une première profondeur ($P_1$, $P_{i-1}$) et une deuxième onde sonore réfléchie par un deuxième objet réflecteur ($R_2$, $R_i$) situé dans ladite colonne d'eau à une deuxième profondeur ($P_2$, $P_i$), supérieure à ladite première profondeur ($P_1$, $P_{i-1}$),
   - fourniture (101, 109) d'une première célérité ($C_i$, $C_{i-1}$) des ondes sonores à ladite première profondeur ($P_1$, $P_{i-1}$),
   - détermination (111) d'une deuxième célérité ($C_2$, $C_i$) des ondes sonores à ladite deuxième profondeur ($P_2$, $P_i$), à partir de fréquences de ladite première ($f_1$, $f_{i-1}$) et de ladite deuxième ($f_2$, $f_i$) ondes sonores réfléchies, de la fréquence d'émission ($f_0$) et de ladite première célérité ($C_1$, $C_{i-1}$).

2. Procédé de détermination selon la revendication 1, **caractérisé en ce que** ladite deuxième célérité est déterminée comme :

$$C_2 = \frac{\Delta f_1}{\Delta f_2} \cdot C_1,$$

Où:

$$\Delta f_1 = f_1 - f_0,$$

$$\Delta f_2 = f_2 - f_0,$$

$f_0$ est la fréquence d'émission,
$f_1$ est la fréquence de la première onde sonore réfléchie,
$f_2$ est la fréquence de la deuxième onde sonore réfléchie,
$C_1$ est la première célérité à la première profondeur.

3. Procédé selon l'une quelconque des revendications 1 ou 2, **caractérisé en ce qu'**il comprend en outre :

   - la fourniture d'une valeur de ladite première profondeur ($P_1$, $P_{i-1}$),
   - la détermination (111) d'une valeur de ladite deuxième profondeur ($P_2$, $P_i$), en fonction de ladite deuxième célérité ($C_2$, $C_i$) et/ou de ladite première célérité ($C_1$, $C_{i-1}$), de la valeur de ladite première profondeur ($P_1$, $P_{i-1}$) et d'un écart temporel ($\Delta ti$) entre la réception par le récepteur (5) de l'onde sonore réfléchie par ledit premier objet réflecteur (R$_1$, R$_{i-1}$) et la réception par le récepteur (5) de l'onde réfléchie par ledit deuxième objet réflecteur (R$_2$, R$_i$).

**4.** Procédé selon l'une quelconque des revendications 1 à 3, **caractérisé en ce que** ledit récepteur (5) est animé d'un mouvement selon ledit axe (Z) dans ladite colonne d'eau, de préférence identique au mouvement dudit émetteur (3).

**5.** Procédé selon la revendication 4, **caractérisé en ce que** ledit émetteur (3) et ledit récepteur (5) sont solidaires ou confondus.

**6.** Procédé de détermination selon l'une quelconque des revendications 1 à 5, **caractérisé en ce que** la fourniture de la première célérité (C$_1$, C$_{i-1}$) comprend les phases suivantes :

- détermination (101) d'une célérité (C$_0$) des ondes sonores à ladite profondeur d'émission (P$_0$),
- détermination (109) de la première célérité (C$_1$), à partir de ladite fréquence (f$_1$) de la première onde sonore réfléchie, de ladite fréquence (f$_0$) d'émission et de la célérité (C$_0$) à ladite profondeur d'émission.

**7.** Procédé selon les revendications 5 et 6, **caractérisé en ce que** la détermination (109) de la première célérité (C$_1$) comprend :

- estimation d'une vitesse (V$_Z$) de déplacement moyenne dudit émetteur (3) dans ladite colonne d'eau selon ledit axe (Z), à partir de la célérité (C$_0$) à ladite profondeur (P$_0$) d'émission,
- détermination de ladite première célérité (C$_1$), à partir de la fréquence (f$_1$) de la première onde sonore réfléchie, de la fréquence (f$_0$) d'émission et de ladite vitesse (Vz) de déplacement moyenne estimée.

**8.** Procédé selon la revendication 7, **caractérisé en ce que** ladite première célérité est déterminée comme :

$$C_1 = 2\frac{f_0}{\Delta f_1} \cdot V_z,$$

où : $V_Z$ est la vitesse de déplacement estimée dudit émetteur (3) dans ladite colonne d'eau selon ledit axe (Z).

**9.** Procédé selon l'une quelconque des revendications 1 à 5, **caractérisé en ce que** la fourniture de la première célérité (C$_1$) comprend la détermination de la première célérité (C$_1$) au moyen d'une sonde située à ladite première profondeur (P$_1$).

**10.** Procédé selon l'une quelconque des revendications 1 à 9, **caractérisé en ce qu'**il comprend les étapes suivantes:

- réception (105), par ledit récepteur (5), d'une pluralité d'ondes sonores réfléchies par une pluralité d'objets réflecteurs (R$_i$) situés dans ladite colonne d'eau à une pluralité de profondeurs croissantes (P$_i$),
- la mise en œuvre d'une pluralité d'étapes (111) successives et itératives de détermination de célérités (C$_i$) des ondes sonores à ladite pluralité de profondeurs croissantes,

la célérité (C$_i$) à chaque profondeur (P$_i$) étant déterminée à partir de la fréquence (f$_i$) de l'onde réfléchie par l'objet réflecteur à ladite profondeur (P$_i$), de la fréquence (f$_{i-1}$) d'une onde réfléchie par un objet réflecteur (R$_{i-1}$) situé dans ladite colonne d'eau à la profondeur précédente (P$_{i-1}$), de la fréquence (f$_0$) d'émission et de la célérité (C$_{i-1}$) des ondes sonores à ladite profondeur (P$_{i-1}$) précédente.

**11.** Procédé selon la revendication 10, **caractérisé en ce que** la célérité (C$_i$) des ondes sonores à chaque profondeur (P$_i$) est déterminée comme :

$$C_i = \frac{\Delta f_{i-1}}{\Delta f_i} \cdot C_{i-1},$$

Où:

$$\Delta f_i = f_i - f_0,$$

$$\Delta f_{i-1} = f_{i-1} - f_0,$$

f$_i$ est la fréquence de l'onde sonore réfléchie à ladite profondeur,
f$_{i-1}$ est la fréquence de l'onde sonore réfléchie à la profondeur précédente,
C$_{i-1}$ est la célérité à la profondeur précédente.

**12.** Procédé selon l'une quelconque des revendications 10 ou 11, **caractérisé en ce qu'**il comprend en outre la détermination itérative de la valeur de chaque profondeur (Pi), la valeur de chaque profondeur donnée (P$_i$) étant déterminée en fonction de la profondeur précédente (P$_{i-1}$) précédemment déterminée, de la célérité (C$_i$) des ondes sonores déterminée à ladite profondeur donnée (P$_i$) et/ou de la célérité (C$_{i-1}$) des ondes sonores à la profondeur précédente (P$_{i-1}$), et d'un écart temporel (Δti) entre la réception par le récepteur (5) de l'onde sonore réfléchie par un objet

réflecteur ($R_{i-1}$) à ladite profondeur précédente et la réception par le récepteur (5) de l'onde sonore réfléchie par un objet réflecteur ($R_i$) à ladite profondeur donnée ($P_i$).

13. Module (11) de détermination d'un profil de célérité d'ondes sonores dans une colonne d'eau pour la mise en œuvre d'un procédé selon l'une quelconque des revendications 1 à 12, ledit module (11) étant adapté pour déterminer, à partir des fréquences de ladite première et de ladite deuxième ondes sonores réfléchies, de la fréquence d'émission et de ladite première célérité, la deuxième célérité des ondes sonores à ladite deuxième profondeur.

14. Système de détermination d'un profil de célérité d'ondes sonores dans une colonne d'eau, ledit système comprenant:

    - un émetteur (3) adapté pour émettre dans ladite colonne d'eau, depuis une profondeur ($P_0$) d'émission, au moins une onde sonore incidente émise à au moins une fréquence d'émission, ledit émetteur étant animé d'un mouvement selon au moins un axe (Z) par rapport à ladite colonne d'eau,

    - un récepteur (5) adapté pour recevoir au moins une première onde sonore réfléchie par un premier objet situé dans ladite colonne d'eau à une première profondeur, et une deuxième onde sonore réfléchie par un deuxième objet situé dans ladite colonne d'eau à une deuxième profondeur, supérieure à ladite première profondeur,

    - un module (11) de détermination du profil de célérité selon la revendication 13.

15. Système selon la revendication 14, **caractérisé en ce que** ledit émetteur (3) et ledit récepteur (5) sont solidaires ou confondus.

**Patentansprüche**

1. - Verfahren zum Bestimmen eines Geschwindigkeitsprofils von Schallwellen in einer Wassersäule, wobei das Verfahren **dadurch gekennzeichnet ist, dass** es die folgenden Schritte umfasst:

    - Senden (103) in die Wassersäule durch einen Sender (3), der sich in einer Sendetiefe ($P_0$) in der Wassersäule befindet, von mindestens einer einfallenden Schallwelle, die mit mindestens einer Sendefrequenz ($f_0$) ausgesendet wird, wobei der Sender (3) von einer Bewegung entlang mindestens einer Achse (Z) in Bezug auf die Wassersäule angeregt wird,

    - Empfangen (105), durch einen Empfänger (5), von mindestens einer ersten Schallwelle, die von einem ersten reflektierenden Objekt ($R_1$, $R_{i+1}$) reflektiert wird, das sich in der Wassersäule in einer ersten Tiefe ($P_1$, $P_{i-1}$) befindet, und einer zweiten Schallwelle, die von einem zweiten reflektierenden Objekt ($R_2$, $R_i$) reflektiert wird, das sich in der Wassersäule in einer zweiten Tiefe ($P_2$, $Pi$) befindet, die größer ist als die erste Tiefe ($P_1$, $P_{i-1}$),

    - Bereitstellen (101, 109) einer ersten Geschwindigkeit ($C_1$; $C_{i-1}$) der Schallwellen in der ersten Tiefe ($P_1$, $P_{i-1}$),

    - Bestimmen (111) einer zweiten Geschwindigkeit ($C_2$, $C_i$) der Schallwellen in der zweiten Tiefe ($P_2$, $P_i$) anhand der Frequenzen der ersten ($f_1$, $f_{i-1}$) und der zweiten ($f_2$, $f_i$) reflektierten Schallwelle, der Sendefrequenz ($f_0$) und der ersten Geschwindigkeit ($C_1$, $C_{i-1}$).

2. - Bestimmungsverfahren nach Anspruch 1, **dadurch gekennzeichnet, dass** die zweite Geschwindigkeit wie folgt bestimmt wird:

$$C_2 = \frac{\Delta f_1}{\Delta f_2} \cdot C_1 ,$$

Wobei:

$$\Delta f_1 = f_1 - f_0,$$

$$\Delta A f_2 = f_2 - f_0,$$

    $f_0$ ist die Sendefrequenz ist,
    $f_1$ die Frequenz der ersten reflektiierten Schallwelle ist;
    $f_2$ die Frequenz der zweiten reflektiierten Schallwelle ist;
    $C_1$ die erste Geschwindigkeit in der ersten Tiefe ist.

3. Verfahren nach einem der Ansprüche 1 oder 2, **dadurch gekennzeichnet, dass** es ferner Folgendes umfasst:

    - Bereitstellen eines Werts der ersten Tiefe ($P_1$; $P_{i-1}$),
    - Bestimmen (111) eines Werts der zweiten Tiefe ($P_2$, $P_i$) abhängig von der zweiten Geschwindigkeit ($C_2$, $C_i$) und/oder der ersten Geschwindigkeit ($C_1$, $C_{i-1}$), des Werts der ersten Tiefe ($P_1$, $P_{i-1}$) und eines zeitlichen Abstands ($\Delta ti$) zwischen dem Empfang der von dem ersten reflektierenden Objekt ($R_1$, $R_{i-1}$) reflektierten Schallwelle durch den Empfänger (5) und dem Empfang der von dem zweiten reflektierenden Objekt ($R_2$, $R_i$) reflektierten Welle durch den Empfänger (5).

4. - Verfahren nach einem der Ansprüche 1 bis 3, **dadurch gekennzeichnet, dass** der Empfänger (5) in der Wassersäule eine Bewegung entlang der Achse (Z) ausführt, die vorzugsweise identisch mit einer Bewegung des Senders (3) ist.

5. - Verfahren nach Anspruch 4, **dadurch gekennzeichnet, dass** der Sender (3) und der Empfänger (5) fest miteinander verbunden oder ineinander übergehend sind.

6. - Verfahren nach einem der vorherigen Ansprüche 1 bis 5, **dadurch gekennzeichnet, dass** das Bereitstellen der ersten Geschwindigkeit ($C_1$, $C_{i-1}$) die folgenden Schritte umfasst:

   - Bestimmen (101) einer Geschwindigkeit ($C_0$) der Schallwellen in der Sendetiefe ($P_0$),
   - Bestimmen (109) der ersten Beschleunigung ($C_1$) anhand der Frequenz ($f_1$) der ersten reflektierten Schallwelle, der Sendefrequenz ($f_0$) und der Geschwindigkeit ($C_0$) in der Sendetiefe.

7. - Verfahren gemäß Anspruch 5 6, **dadurch gekennzeichnet, dass** das Bestimmen (109) der ersten Geschwindigkeit ($C_1$) Folgendes erfasst:

   - Schätzen einer durchschnittlichen Schnelligkeit ($V_Z$) einer Bewegung des Senders (3) in der Wassersäule entlang der Achse (Z) anhand der Geschwindigkeit ($C_0$) in der Sendetiefe ($P_0$),
   - Bestimmen der ersten Geschwindigkeit ($C_1$) aus der Frequenz ($f_1$) der ersten reflektierten Schallwelle, der Sendefrequenz ($f_0$) und der geschätzten mittleren Bewegungsschnelligkeit ($V_z$).

8. - Bestimmungsverfahren nach Anspruch 7, **dadurch gekennzeichnet, dass** die erste Geschwindigkeit wie folgt bestimmt wird:

$$C_1 = 2\frac{f_0}{\Delta f_1} \cdot V_z,$$

wobei: $V_z$ die geschätzte Bewegungsschnelligkeit des Senders (3) in der Wassersäule entlang der Achse (Z) ist.

9. - Verfahren nach einem der Ansprüche 1 bis 5, **dadurch gekennzeichnet, dass** das Bereitstellen der ersten Geschwindigkeit ($C_1$) ein Bestimmen der ersten Geschwindigkeit ($C_1$) mittels einer Sonde umfasst, die sich in der ersten Tiefe ($P_1$) befindet.

10. -Verfahren nach einem der Ansprüche 1 bis 9, **dadurch gekennzeichnet, dass** es die folgenden Schritte umfasst:

    - Empfangen (105), durch den Empfänger (5), einer Vielzahl von Schallwellen, die von einer Vielzahl von reflektierenden Objekten ($R_i$) reflektiert werden, die sich in der Wassersäule in einer Vielzahl von ansteigenden Tiefen ($P_i$) befinden,
    - Durchführen einer Vielzahl von aufeinanderfolgenden und iterativen Schritten (111) zum Bestimmen von Geschwindigkeiten ($C_i$) von Schallwellen bei der Vielzahl von zunehmenden Tiefen, wobei die Geschwindigkeit ($C_i$) in jeder Tiefe ($P_i$) anhand der Frequenz ($f_i$) der von dem reflektierenden Objekt in der Tiefe ($P_i$) reflektierten Welle, der Frequenz ($f_{i-1}$) einer von einem reflektierenden Objekt ($R_{i-1}$), das sich in der Wassersäule in der vorhergehenden Tiefe ($P_{i-1}$) befindet, reflektierten Welle, der Emissionsfrequenz ($f_0$) und der Geschwindigkeit ($C_{i-1}$) der Schallwellen in der vorhergehenden Tiefe ($P_{i-1}$) bestimmt wird.

11. - Verfahren nach Anspruch 10, **dadurch gekennzeichnet, dass** die Geschwindigkeit ($C_i$) der Schallwellen in jeder Tiefe ($P_i$) wie folgt bestimmt wird:

$$C_i = \frac{\Delta f_{i-1}}{\Delta f_i} \cdot C_{i-1},$$

Wobei:

$$\Delta f_i = f_i - f_0,$$

$$\Delta f_{i-1} = f_{i-1} - f_0,$$

    $f_i$ die Frequenz der Schallwelle ist, die in der Tiefe reflektiert wird,
    $f_{i-1}$ die Frequenz der Schallwelle ist, die in der vorhergehenden Tiefe reflektiert wird,
    $C_{i-1}$ die Geschwindigkeit in der vorhergehenden Tiefe ist.

12. - Verfahren nach einem der Ansprüche 10 oder 11, **dadurch gekennzeichnet, dass** es ferner das iterative Bestimmen des Werts jeder Tiefe ($P_i$) umfasst, wobei der Wert jeder gegebenen Tiefe ($P_i$) abhängig von der vorhergehenden, zuvor bestimmten Tiefe ($P_{i-1}$), der in der gegebenen Tiefe ($P_i$) bestimmten Geschwindigkeit ($C_i$) der Schallwellen und/oder der Geschwindigkeit ($C_{i-1}$) der Schallwellen in der vorhergehenden Tiefe ($P_{i-1}$) und einem zeitlichen Abstand ($\Delta t_i$) zwischen dem Empfang der von einem

reflektierenden Objekt ($R_{i-1}$) in der vorhergehenden Tiefe reflektierten Schallwelle durch den Empfänger (5) und dem Empfang der von einem reflektierenden Objekt ($R_i$) in der gegebenen Tiefe (Pi) reflektierten Schallwelle durch den Empfänger (5) bestimmt wird.

13. - Modul (11) zur Bestimmung eines Geschwindigkeitsprofils von Schallwellen in einer Wassersäule zum Durchführen eines Verfahrens nach einem der Ansprüche 1 bis 12, wobei das Modul (11) angepasst ist, um anhand der Frequenzen der ersten und der zweiten reflektierten Schallwelle, der Sendefrequenz und der ersten Geschwindigkeit die zweite Geschwindigkeit der Schallwellen in der zweiten Tiefe zu bestimmen.

14. - System zum Bestimmen eines Geschwindigkeitsprofils von Schallwellen in einer Wassersäule, das System umfassend:

- einen Sender (3), der angepasst ist, um aus einer Sendetiefe ($P_0$) mindestens eine einfallende Schallwelle, die mit mindestens einer Sendefrequenz ausgesendet wird, in die Wassersäule zu senden, wobei der Sender von einer Bewegung entlang mindestens einer Achse (Z) in Bezug auf die Wassersäule angeregt wird,
- einen Empfänger (5), der angepasst ist, um mindestens eine erste Schallwelle, die von einem ersten Objekt reflektiert wird, das sich in der Wassersäule in einer ersten Tiefe befindet, und eine zweite Schallwelle, die von einem zweiten Objekt reflektiert wird, das sich in der Wassersäule in einer zweiten Tiefe befindet, die größer ist als die erste Tiefe, zu empfangen
- ein Modul (11) zum Bestimmen des Geschwindigkeitsprofils nach Anspruch 13.

15. - System nach Anspruch 14, **dadurch gekennzeichnet, dass** der Sender (3) und der Empfänger (5) fest miteinander verbunden oder ineinander übergehend sind.


**Claims**

1. A method for determining a velocity profile of sound waves in a water column, said method being **characterized in that** it comprises the following steps:

- emitting (103) in said water column, by an emitter (3) located in the water column at an emitting depth ($P_0$), at least one incident sound wave emitted at least at one emitting frequency ($f_0$), said emitter (3) being moved along at least one axis (Z) relative to said water column,
- receiving (105), by a receiver (5), at least one first sound wave reflected by a first reflective object ($R_1$, $R_{i-1}$) located in said water column at a first depth ($P_1$, $P_{i-1}$) and a second sound wave reflected by a second reflective object ($R_2$, $R_i$) located in said water column at a second depth ($P_2$, $P_i$), greater than the first depth ($P_1$, $P_{i-1}$),
- providing (101, 109) a first velocity ($C_1$, $C_{i-1}$) of the sound waves at said first depth ($P_1$, $P_{i-1}$),
- determining (111) a second velocity ($C_2$, $C_i$) of the sound waves at said second depth ($P_2$, $P_i$), from the frequencies of said first ($f_1$, $f_{i-1}$) and said second ($f_2$, $f_i$) reflected sound waves, the emitting frequency ($f_0$) and said first velocity ($C_1$, $C_{i-1}$).

2. The determining method according to claim 1, **characterized in that** said second velocity is determined as:

$$C_2 = \frac{\Delta f_1}{\Delta f_2} \cdot C_1,$$

Where :

$$\Delta f_1 = f_1 - f_0,$$

$$\Delta f_2 = f_2 - f_0,$$

$f_0$ is the emitting frequency,
$f_1$ is the frequency of the first reflected sound wave,
$f_2$ is the frequency of the second reflected sound wave,
$C_1$ is the first velocity at the first depth.

3. The method according to any one of claims 1 or 2, **characterized in that** it further comprises:

- providing a value of said first depth ($P_1$, $P_{i-1}$),
- determining (111) a value of said second depth ($P_2$, $P_i$), as a function of said second velocity ($C_2$, $C_i$) and/or said first velocity ($C_1$, $C_{i-1}$), the value of said first depth ($P_1$, $P_{i-1}$) and the time gap ($\Delta t_i$) between the reception by the receiver (5) of the sound wave reflected by said first reflective object ($R_1$, $R_{i-1}$) and the reception by the receiver (5) of the sound wave reflected by said second reflective object ($R_2$, $R_i$).

4. The method according to any one of claims 1 to 3, **characterized in that** said receiver (5) is moved along said axis (Z) in said water column, preferably identically to the movement of said emitter (3).

5. The method according to claim 4, **characterized in that** said emitter (3) and said receiver (5) are secured or combined.

6. The determining method according to any one of claims 1 to 5, **characterized in that** the provision of the first velocity ($C_1$, $C_{i-1}$) comprises the following phases:

- determining (101) a velocity ($C_0$) of the sound waves at said emitting depth ($P_0$),
- determining (109) the first velocity ($C_1$), from said frequency ($f_1$) of the first reflected sound wave, said emitting frequency ($f_0$) and the velocity ($C_0$) at said emitting depth.

7. The method according to claims 5 and 6, **characterized in that** the determination (109) of the first velocity ($C_1$) comprises:

- estimating an average movement speed ($V_z$) of said emitter (3) in said water column along said axis (Z), from the velocity ($C_0$) at said emitting depth ($P_0$),
- determining said first velocity ($C_1$), from the frequency ($f_1$) of the first reflected sound wave, the emitting frequency ($f_0$) and said estimated average movement speed ($V_Z$).

8. The method according to claim 7, **characterized in that** said first velocity is determined as:

$$C_1 = 2 \frac{f_0}{\Delta f_1} \cdot V_z,$$

where: $V_Z$ is the estimated movement speed of said emitter (3) in said water column along said axis (Z).

9. The method according to any one of claims 1 to 5, **characterized in that** the provision of the first velocity ($C_1$) comprises determining the first velocity ($C_1$) using a probe located at said first depth ($P_1$).

10. The method according to any one of claims 1 to 9, **characterized in that** it comprises the following steps:

- reception (105), by said receiver (5), of a plurality of sound waves reflected by a plurality of reflective objects ($R_i$) located in said water column at a plurality of increasing depths ($P_i$),
- implementing a plurality of successive and iterative steps (111) for determining velocities ($C_i$) of the sound waves at said plurality of increasing depths, the velocity ($C_i$) at each depth ($P_i$) being determined from the frequency ($f_i$) of the wave reflected by the reflective object at said depth ($P_i$), the frequency ($f_{i-1}$) of a wave reflected by a reflective object ($R_{i-1}$) located in said water column at the preceding depth ($P_{i-1}$), the emission frequency ($f_0$) and the velocity ($C_{i-1}$) of the sound waves at said preceding depth ($P_{i-1}$).

11. The method according to claim 10, **characterized in that** the velocity ($C_i$) of the sound waves at each depth ($P_i$) is determined as:

$$C_i = \frac{\Delta f_{i-1}}{\Delta f_i} \cdot C_{i-1},$$

Where :

$$\Delta f_i = f_i - f_0,$$

$$\Delta f_{i-1} = f_{i-1} - f_0,$$

$f_i$ is the frequency of the sound wave reflected at said depth,
$f_{i-1}$ is the frequency of the sound wave reflected at the preceding depth,
$C_{i-1}$ is the velocity at the preceding depth.

12. The method according to any one of claims 10 or 11, **characterized in that** it further comprises the iterative determination of the value of each depth (Pi), the value of each given depth ($P_i$) being determined as a function of the preceding depth ($P_{i-1}$) previously determined, the velocity ($C_i$) of the sound waves determined at said given depth ($P_i$) and/or the velocity ($C_{i-1}$) of the sound waves at the preceding depth ($P_{i-1}$), and a time gap ($\Delta t_i$) between the reception by the receiver (5) of the sound wave reflected by a reflective object ($R_{i-1}$) at said preceding depth and the reception by the receiver (5) of the sound wave reflected by a reflective object ($R_i$) at said given depth ($P_i$).

13. A module (11) for determining a velocity profile of sound waves in a water column for the implementation of a method according to any one of claims 1 to 12, said module (11) being suitable for determining, from frequencies of said first and said second reflected sound waves, from the emission frequency and said first velocity, the second velocity of the sound waves at said second depth.

14. A system for determining a velocity profile of sound waves in a water column, said system comprising:

- an emitter (3) suitable for emitting in said water column, from an emitting depth ($P_0$), at least one incident sound wave emitted at least at one emission frequency, said emitter being moved along at least one axis (Z) relative to said water column,

- a receiver (5) suitable for receiving at least one first sound wave reflected by a first object located in said water column at a first depth, and a second sound wave reflected by a second object located in said water column at a second depth, greater than the first depth,

- a module (11) for determining the velocity profile according to claim 13.

15. The system according to claim 14, **characterized in that** said emitter (3) and said receiver (5) are secured or combined.

$P_0$

$P_1$ — $R_1$

$P_2$ — $R_2$

$P_3$ — $R_3$

$P_{i-1}$ — $R_{i-1}$

$P_i$ — $R_i$

$P_n$ — $R_n$

Z

F

## FIG.1

FIG.2

**EP 3 710 857 B1**



## RÉFÉRENCES CITÉES DANS LA DESCRIPTION

**Documents brevets cités dans la description**

- US 6577557 B1
- US 5568450 A